# EUROPEAN PATENT SPECIFICATION

(11) **EP 2 055 616 B1**
(45) Date of publication and mention of the grant of the patent: **20.11.2013**
(21) Application number: 07793030.3
(22) Date of filing: 27.08.2007
(51) Int. Cl.: B62D 55/24, B62D 55/08

(54) **RUBBER TRACK**
GUMMIRAUPE
PISTE EN CAOUTCHOUC

(30) Priority: 25.08.2006 JP 2006229273
(43) Date of publication of application: 06.05.2009
(73) Proprietor: Bridgestone Corporation, Tokyo 104-8340 (JP)
(72) Inventor: SUGIHARA, Shingo, Tokyo 104-8340 (JP)
(74) Representative: Waldren, Robin Michael
(86) International application number: PCT/JP2007/066578
(87) International publication number: WO 2008/023820

(56) References cited:
- EP-A1- 1 197 515
- CA-A1- 2 533 344
- JP-A- 09 164 980
- JP-A- 2002 166 861
- JP-A- 2002 166 861
- JP-A- 2003 011 860
- JP-A- 2004 114 732
- JP-A- 2004 114 732
- JP-A- 2004 276 685
- JP-A- 2006 160 069
- US-A1- 2004 070 273
- US-A1- 2005 103 540
- US-B1- 6 300 396

## Description

### Technical Field

The present invention relates to a traveling device with a mandrel-less rubber track (hereinafter, simply called a rubber track) that reduces teeth skipping.

### Background Art

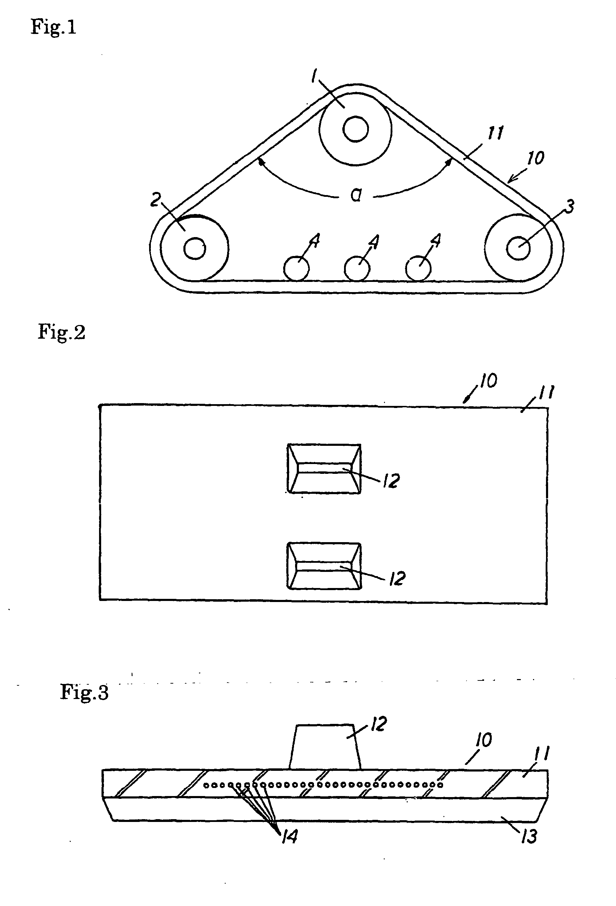

A rubber track was initially used for a traveling device of an agricultural machine. Thereafter, the rubber track was developed to a traveling device of a constructing machine and a civil engineering machine. In recent years, the rubber track has been used for even a traveling device of a general vehicle and has been applied to relatively high-speed traveling. Fig. 1 illustrates a side view of the traveling device of the vehicle. A sprocket 1 provided on the vehicle is disposed at a vertex and idlers 2 and 3 are arranged on the left and right of the sprocket 1 so as to form a triangular chassis configuration (hereinafter, simply called a triangular chassis portion) having the sprocket at the vertex thereof. A rubber track 10 is passed over the triangular chassis portion so as to form a triangular shape. In the ground contacting portion, track rollers 4 provided on the rubber track 10 or the vehicle are rolled by holding the inner peripheral surface of the rubber track 10.

Fig. 2 is a plan view of the inner peripheral side illustrating the configuration of the rubber track 10. Fig. 3 is a cross-sectional view in the lateral direction. A rubber elastic member 11 of the rubber track 10 is endlessly continued to the upper and lower sides of Fig. 2. Rubber projections 12 are formed on the center of the inner peripheral surface of the rubber elastic member 11 at substantially predetermined intervals. A rubber lug 13 is formed on the outer peripheral surface of the rubber elastic member 11. Steel cords 14 as tension reinforcing members are buried into the rubber elastic member 11 in its longitudinal direction (travel direction).

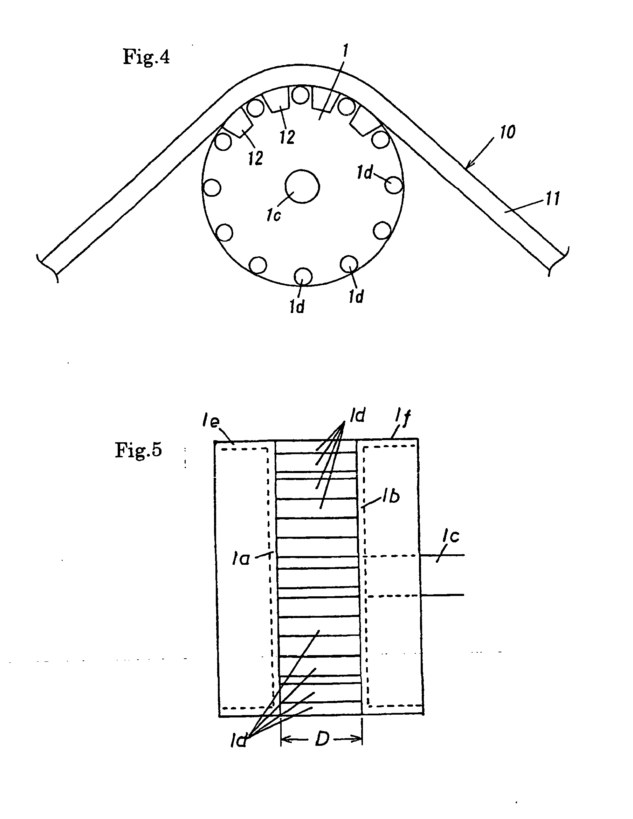

Some of sprockets are of a gear type. Fig. 4 is a side view illustrating an example of a sprocket 1 of a pin type. Fig. 5 is a front view thereof. Such sprocket 1 has a pair of discs 1a and 1b that are connected to an axis 1c leading to a driving motor, not illustrated, of the vehicle, and pin 1d on the circumferential edges of the discs 1 a and 1b at a pitch according to the pitch of the rubber projections 12 of the rubber track 10. The pin 1d engages the rubber projections 12 to transmit the driving force of the vehicle to the rubber track 10. In Fig. 4 the outer disc 1a is omitted. Outward flange portions 1e and 1f are formed on the circumferential edges of the discs 1a and 1b and are brought into contact with the inner peripheral surface of the rubber track 10 for rolling.

As understood in the drawings, the engagement of the sprocket 1 at the vertex of the triangular chassis portion and the rubber track 10 is different from that of the agricultural machine and the constructing machine and the sprocket 1 has an engaging angle 'a' of 180[deg.] or less. Accordingly, the section on which the pin 1d brought into contact with the rubber projections 12 exists (the contacting section of the inner peripheral surface of the rubber projections 12 and the pin 1d) is small, and thus, the contact pressure acting on one rubber projections 12 is increased to greatly deform the rubber projections 12 so that teeth skipping phenomenon in which the pin 1d skips the rubber projections 12 easily occurs. If such teeth skipping phenomenon occurs repeatedly, the pin repeatedly collides with the unexpected portion of the rubber projections and accordingly, the rubber projections may be broken. Attention is drawn to JP2004 114,732, JP2002 166,861, EP 1,197,515 and US 6,300,396.
JP 2004 114 732 A shows a rubber track traveling device comprising: a sprocket comprising a pin; idlers; and a rubber track that is passed over the sprocket provided on a vehicle and the idlers, the rubber track having rubber projections raised on the center of the inner peripheral surface of the track at constant intervals in a travel direction, wherein the rubber projections each have: side walls each having an upright surface that is provided substantially normal to the inner peripheral surface of the rubber track and an inclined surface that is inclined from the termination of the upright surface in the direction approaching each other; and a top wall that is formed at the top of the side wall and is parallel with the inner peripheral surface of the rubber track.

### Disclosure of the Invention

The present invention provides a rubber track traveling device with a rubber track having increased durability achieved by reducing teeth skipping phenomenon occurring between a sprocket at the vertex of a triangular chassis portion and rubber projections of the rubber track,

A rubber track traveling device of a first aspect is as claimed in claim 1.

The rubber track of the first aspect has the rubber projections raised on the center of the inner peripheral surface of the track at a constant pitch in the travel direction. The relation between the length A of the rubber projections in the lateral direction (normal to the travel direction) and the pitch C in the travel direction of the rubber projections is in the equation of C<=A.

In general, if the contact pressure applied from the pin of the sprocket of the pin type to side walls of the rubber projections are too large, the rubber projections are excessively deformed so that teeth skipping occur. To reduce the teeth skipping, the contact pressure applied from the pin of the sprocket to the rubber projections may be decreased. It is considered that the areas of the portion in which the pin of the sprocket is brought into contact with the rubber projections are increased.

By setting the length A of the rubber projections in the lateral direction to be equal or larger than the pitch C in the travel direction of the rubber projections or more, the area of the rubber projections brought into contact with the pin is larger than that of the rubber projections provided on the rubber track of the related art in which the length A in the lateral direction is less than the pitch C of the rubber projections. Thus, the contact pressure applied from the pin of the sprocket to the rubber projections is decreased to reduce the deformation of the rubber projections and teeth skipping of the pin relative to the rubber projections may be prevented.

The rubber track of a second aspect is characterized in that the ratio (C/A) of the pitch C of the rubber projections to the length A of the rubber projections in the lateral direction is from 0.3 to 1.0.

When the ratio of the pitch C of the rubber projections to the length A of the rubber projections in the lateral direction is less than 0.3, the pitch C of the rubber projections becomes so small that the driving force may not be efficiently transmitted from the sprocket to the rubber track. When the ratio of the pitch C of the rubber projections to the length A of the rubber projections in the lateral direction is more than 1.0, the number of the rubber projections engaging the pin of the sprocket is so small that the sufficient driving force may not be transmitted from the sprocket to the rubber track.

Accordingly, the ratio (C/A) of the pitch C of the rubber projections to the length A of the rubber projections in the lateral direction is set to be from 0.3 to 1.0 so that the driving force may be efficiently transmitted from the sprocket to the rubber track.

The rubber track of a third aspect is **characterized in that** the contact range of the sprocket and the inner peripheral surface of the rubber track is 170 degrees or less, seen from the center of the sprocket. Thus, the engagement of any stone between the pin of the sprocket and the rubber projections may be prevented.

The rubber track of the first aspect is characterized in that the rubber projections each have side walls each having an upright surface that is provided substantially normal to but not normal the inner peripheral surface of the rubber track and an inclined surface that is inclined from the termination of the upright surface in the direction approaching each other; and a top wall that is formed at the top of the side wall and is parallel with the inner peripheral surface of the rubber track.

In the rubber track of the first aspect, each of the side walls of the rubber projections has the upright surface that is provided substantially normal to but not normal to the inner peripheral surface of the inner peripheral surface of the rubber track and the inclined surface that is inclined from the termination of the upright surface in the direction approaching each other. The top wall that is parallel with the inner peripheral surface of the rubber track is formed at the top of the side wall. Consequently the sprocket is harder to skip the rubber projections, and thus, teeth skipping can be prevented more effectively compared with a rubber track having rubber projections of which each side wall includes only of inclined surface erecting from the inner peripheral surface of the rubber track and inclined in the direction meeting to each other.

The rubber track of the first aspect is also characterized in that the height from the inner peripheral surface of the rubber track to the termination of the upright surface is less than the radius of a pin of the sprocket.

In the rubber track of the first aspect, the height from the inner peripheral surface of the rubber track to the termination of the upright surface configuring the side wall of the rubber track is less than the radius of the pin configuring the sprocket. When the pin passes over the rubber projections, the passing-over force is not likely to be generated. Further, on rotation of the rubber track over the sprocket, the pin is brought into contact with the upright surface of the rubber projections.

The rubber track of a fourth aspect is **characterized in that** the rubber projections are formed of rubber in which at least one of fatty acid amide or low-friction resin powder is blended.

In the rubber track of the fourth aspect, the rubber projections are formed of rubber in which at least one of fatty acid amide and low-friction resin powder is blended, and therefore, the friction coefficient of the rubber projections is decreased to reduce the sliding resistance of the sprocket (pin). Thus, teeth skipping of the sprocket of the rubber track may be prevented.

The rubber track of a fifth aspect is characterized in that the rubber projections has a static friction coefficient of 0.4 to 1.4.

When the static friction coefficient is less than 0.4, sliding occurs when the sprocket (pin) passes over the rubber projections. When the static friction coefficient is more than 1.4, the sprocket sticks to the rubber projections and the sprocket may not penetrate into the root of the rubber projections, and accordingly, the rubber projections may be broken.

By forming the rubber projections so as to have a static friction coefficient of 0.4 to 1.4, sliding between the sprocket and the rubber projections can be prevented and the rubber projections are not easily broken.

The rubber track of a sixth aspect is characterized in that the contact pressure applied from the pin of the sprocket to the rubber projections is 0.8 to 3.7MPa. Here, the contact pressure is referred to as an average contact pressure of the entire portion in which the sprocket engages the rubber projections.

When the contact pressure applied from the pin of the sprocket to the rubber projections is less than 0.8MPa, the driving force transmitted from the sprocket to the rubber projections is weakened. On the other hand, when the contact pressure applied from the pin of the sprocket to the rubber projections is larger than 3.7MPa, there is a possibility that the rubber projections are broken.

Accordingly, the contact pressure applied from the pin of the sprocket to the rubber projections is set to be from 0.8 to 3.7MPa so that the breakage of the rubber projections may be prevented and the driving force is efficiently transmitted from the sprocket to the rubber projections.

The rubber track of a seventh aspect is **characterized in that** the hardness of the rubber projections is 80 to 90 degrees (JIS.A).

When the hardness of the rubber projections is less than 80 degrees, the rubber projections are easily deformed only when the pin of the sprocket is brought into contact with the rubber projections, and accordingly, the sprocket easily skips the rubber projections so that teeth skipping is prone to occur. When the hardness of the rubber projections is more than 90 degrees, the rubber projections has such a low flexibility that the rubber projections may be broken when the pin of the sprocket is brought into contact with the rubber projections.

Accordingly, the hardness of the rubber projections is set from 80 to 90 degrees so that the pin of the sprocket do not easily skip the rubber projections so as to prevent breakage of the rubber projections.

The rubber track of an eighth aspect is characterized in that the ratio (A/B) of the length A of the rubber projections in the lateral direction to the length B in the direction normal to the length A in the lateral direction is from 1.3 to 4.0.

When the ratio (A/B) of the length A of the rubber projections in the lateral direction to the length B in the direction normal to the length A of the rubber projections in the lateral direction is less than 1.3, the rubber projections may be easily deformed, and thus, there is a possibility that the rubber projections are broken when the pin of the sprocket is brought into contact with the rubber projections.

On the other hand, when the ratio (A/B) of the length A of the rubber projections in the lateral direction to the length B in the direction normal to the length A of the rubber projections in the lateral direction is more than 4.0, the rubber projections are so thin as to be deformed so much that the wheel may come off when track rollers press the projections in the lateral direction.

Therefore, the ratio (A/B) of the length A of the rubber projections in the lateral direction to the length B in the direction normal to the length A of the rubber projections in the lateral direction is set from 1.3 to 4.0 so as to obtain a rubber projections that is not prone to be broken.

The present invention provides a rubber track having increased durability achieved by reducing teeth skipping phenomenon occurring between the sprocket at the vertex of the triangular chassis portion and the rubber projections of the rubber track.

### Brief Description of the Drawings

Fig. 1 illustrates a side view of a rubber track traveling device on which a rubber track is mounted;
Fig. 2 is a plan view of the inner peripheral side of the rubber track as in the state of the art;
Fig. 3 is a cross-sectional view of the rubber track of Fig. 2 in the lateral direction as in the state of the art;
Fig. 4 is a side view of a sprocket;
Fig. 5 is a front view of the sprocket of Fig. 4;
Fig. 6 is a plan view of the inner peripheral side of a rubber track according to the exemplary embodiment;
Fig. 7 is a cross-sectional view of the rubber track of Fig. 6 in the lateral direction;
Fig. 8 is a side view illustrating the relation between a rubber projections and a pin;
Fig. 9 is a side view illustrating the relation between a rubber projections and the pin in a conventional rubber track traveling device, not according to the invention; and

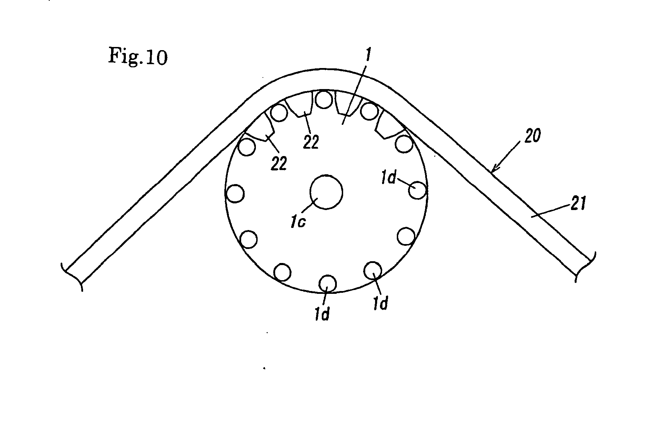

Fig. 10 is a side view of the sprocket.

### Description of the Reference Numerals

- 1: Sprocket
- 2: Idler
- 3: Idler
- 4: Track roller
- 10: Rubber track
- 11: Rubber elastic member
- 12: Rubber projections
- 13: Rubber lug
- 14: Steel cord
- 20: Rubber track
- 21: Rubber elastic member
- 22: Rubber projections
- 23: Rubber lug
- 24: Steel cord

### Best Mode for Carrying out the Invention

As described above, teeth skipping phenomenon occurs between the driving rubber projections and the sprocket. The inventors have examined such phenomenon intensely and have found that when the contact pressure applied to the rubber projections by the driving force transmitted from the driving motor of the vehicle exceeds a predetermined value, the deformation of the rubber projections is excessively increased so that teeth skipping phenomenon may occur between the rubber projections and the sprocket. When the contact section of the sprocket and the inner peripheral surface of the rubber track extend in a range of 170 degrees or less seen from the center of the sprocket, the engagement of the sprocket with the rubber track tends to be insufficient, and accordingly, teeth skipping phenomena happens in a high frequency.

The phenomenon is caused by too much force applied to one rubber projections (driving force) and by resulting engagement failure because of huge deformation of the rubber projections. When the teeth skipping repeats, the impact force is repeatedly applied to the rubber projections, and thus, the rubber projections may be broken.

The invention is brought by a complex improvement of the rubber projections. The configuration and shape of the rubber projections provided to driving are set in a specified range and in addition, the contact pressure received from the sprocket is defined so as to reduce the frequency of teeth skipping.

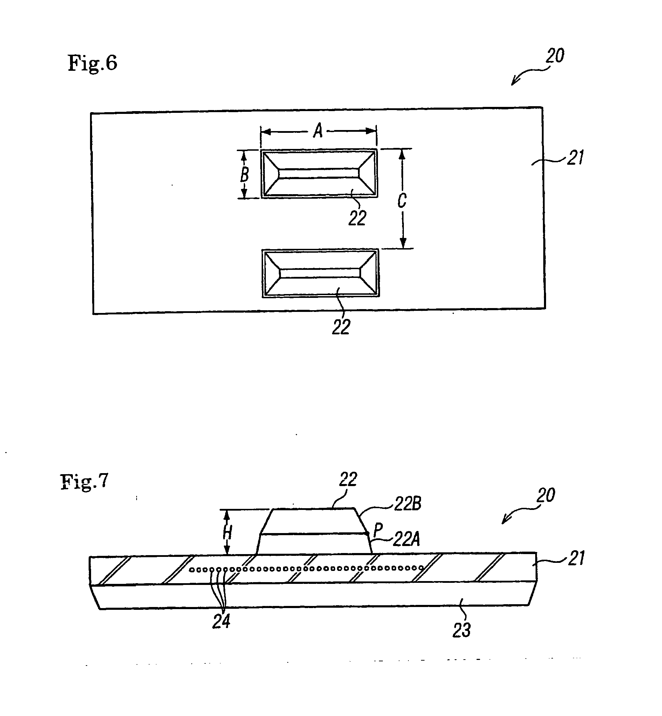

Fig. 6 is a plan view of a rubber track 20 of the exemplary embodiment, seen from its inner peripheral side. Fig. 7 is a cross-sectional view of the rubber track 20 in the lateral direction (normal to the travel direction).

The rubber track 20 has an endless rubber elastic member 21. As tension reinforcing members, steel cords 24 are buried into the rubber elastic member 21 in the travel direction. A rubber lug 23 is formed on the outer peripheral surface of the rubber elastic member 21.

Rubber projections 22 are formed on the center portion of the inner peripheral surface of the rubber elastic member 21, at substantially predetermined intervals in the travel direction. A side wall of the rubber projections 22 with which the pin 1d is brought into contact has an upright surface 22A that is provided upright from the inner peripheral surface of the rubber track 20, and an inclined surface 22B that is inclined from the termination of the upright surface 22A in the direction approaching each other. A top wall 22 that is parallel with the inner peripheral surface of the rubber track 20 is formed at the top of the inclined surface 22B. The rubber projections 22 have a hexagonal shape viewed from the rubber track 20 in the lateral direction (normal to the travel direction).

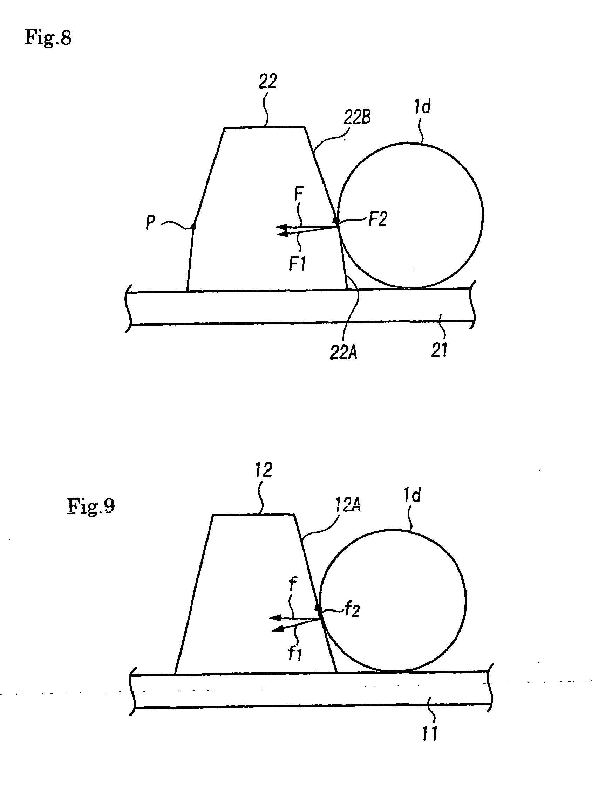

As illustrated in Fig. 8, the pin 1d of the sprocket 1 engages the rubber projections 22. The pin 1d is brought into contact with the upright surface 22A of the rubber projections 22. The pin 1d passes over the boundary portion of the upright surface 22A and the inclined surface 22B (hereinafter, the boundary portion will be an "inflection point P"). The pin 1 d is directed toward the next rubber projections 22 along the inclined surface 22B.

The pin 1d presses the upright surface 22A in the horizontal direction. As illustrated in Fig. 8, a pressing force F to the rubber projections 22 is divided into a component F1 normal to the upright surface 22A and a component F2 parallel with the upright surface 22A. The component F2 is a force in which the pin 1d passes over the rubber projections 22.

As illustrated in Fig. 9, in the related art, the rubber projections 12 having only the inclined surface that is provided upright from the inner peripheral surface of the rubber elastic member 11 and is inclined in the direction approaching each other is pressed by the pin 1d in the horizontal direction. A pressing force f of the pin 1d to the rubber projections 12 is divided into a component f1 normal to a wall surface 12A and a component f2 parallel with the wall surface 12A. The component f2 is a force in which the pin 1d passes over the rubber projections 12.

From Figs. 8 and 9, it is understood that the pressing force F2 is smaller than the pressing force f2. In the exemplary embodiment, the pin 1d is less prone to pass over the rubber projections 22 having a right-angle wall surface 22A that is substantially normal to the inner peripheral surface of the rubber elastic member 21.

Accordingly, compared with the conventional rubber projections 12 which has only inclined surfaces that erect from the inner peripheral surface of the rubber elastic member 11 and is inclined in the direction approaching each other, the rubber projections 22 of the exemplary embodiment is less prone to be passed over by the pine 1d. Thus, teeth skipping may be prevented.

The height from the inner peripheral surface of the rubber elastic member 21 to the inflection point P (the height to the termination of the upright surface 22A) is lower than the radius of the pin 1d, and accordingly, when the pin 1d passes over the rubber projections 22, the passing-over force is not prone to be generated. When the height of the inflection point P is increased, rubbing occurs easily in the protruded location (the inflection point P), and accordingly, it is not preferable because the rubber projections 22 may be easily broken.

As illustrated in Fig. 6, the rubber track satisfies the equation of C≤A≤D, with A the length of the rubber projections 22 in the lateral direction (normal to the travel direction), C the pitch of the rubber projections 22, D the length of the pin 1d provided on the sprocket 1. The length A of the rubber projections 22 in the lateral direction is thus set.

When the length A of the rubber projections 22 in the lateral direction is less than the pitch C of the rubber projections 22, the contact pressure applied from the pin 1d to the rubber projections 22 is increased, and thus, the pin 1d skips the rubber projections 22. Accordingly, by setting the length A of the rubber projections 22 in the lateral direction so as to be equal or larger than the pitch C of the rubber projections 22, compared with a conventional rubber track 10 wherein the length of the rubber projections 12 of the rubber track 10 in the lateral direction is set to be less than the pitch of the rubber projections 12 as shown in Fig.2, the area of the rubber projections 22 contacted with the pin 1d can be made larger. Thus, the contact pressure applied from the pin 1d to the rubber projections 22 is reduced and deformation of the rubber projections 22 is suppressed, and accordingly, teeth skipping of the pin 1d relative to the rubber projections 22 may be prevented.

If the length A of the rubber projections 22 in the lateral direction is larger than the length of the pin 1d, there is a possibility that the end of the pin 1d penetrates into the rubber projections 22 to damage the rubber projections 22.

Thus, the length A of the rubber projections 22 in the lateral direction is set so that the rubber track satisfies the equation of C≤A≤D, and consequently, teeth skipping of the pin 1d relative to the rubber projections 22 may be prevented and damage of the rubber projections 22 by the pin 1d can be suppressed.

In the exemplary embodiment, the rubber track 20 that is passed over the sprocket 1 of the pin type is described. The length A of the rubber projections 22 in the lateral direction is set so as to be equal or larger than the pitch C of the rubber projections 22 and to be equal or smaller than the length D of the pin 1d. In the rubber track that is passed over a sprocket of the gear type, the length A of the rubber projections 22 in the lateral direction may be equal or larger than the pitch C of the rubber projections 22.

Additionally, when the ratio (C/A) of the pitch C of the rubber projections 22 to the length A of the rubber projections 22 in the lateral direction is less than 0.3, the pitch C of the rubber projections 22 becomes shorter, and thus, a problem that the driving force transmitted from the driving motor of the vehicle may not be efficiently transmitted to the rubber track 20 may occur. On the other hand, when the ratio (C/A) of the pitch C of the rubber projections 22 to the length A of the rubber projections 22 in the lateral direction is more than 1, the number of the rubber projections 22 engaging the pin 1d of the sprocket 1 is too small, and accordingly, a problem that the sufficient driving force may not be transmitted from the vehicle to the rubber track 20 may occur.

Accordingly, the ratio (C/A) of the pitch C of the rubber projections 22 to the length A of the rubber projections 22 in the lateral direction is set to be from 0.3 to 1, and accordingly, the driving force from the vehicle may be transmitted to the rubber track 20 sufficiently and efficiently.

Additionally, the ratio (A/B) of the length (A) of the rubber projections 22 in the lateral direction to the length (B) in the direction normal to the length in the lateral direction is 1.3 to 4.0.

When the ratio A/B is less than 1.3, the rubber projections 22 is easily deformed. When the pin 1d is brought into contact with the rubber projections 22, the rubber projections 22 may be broken.

On the other hand, when the ratio A/B is more than 4.0, the rubber projections 22 is thinned, and thus, the deformation of the rubber projections 22 pressed by the track rollers 4 in the lateral direction is increased so that the wheel may come off. The ratio A/B is 1.3 to 4.0 to obtain the rubber projections 22 that is hard to be broken. The more preferable value of the ratio A/B is 1.5 to 2.5.

The height H of the rubber projections 22 is set to be smaller than the pitch C of the rubber projections 22, and thus, the strength of the rubber projections 22 is higher than that of a conventional example wherein the height H of the rubber projections 22 is set to be larger than the pitch C of the rubber projections 22.

The rubber portion configuring the rubber projections 22 has a hardness of 80 to 90 degrees (JIS-A). If the hardness of the rubber projections 22 is less than 80 degrees, the pin 1d is brought into contact with the rubber projections 22 so that the rubber projections 22 may be easily deformed and thus, the pin 1d easily skips the rubber projections 22 and teeth skipping would easily occur. On the other hand, if the hardness of the rubber projections 22 is more than 90 degrees, the rubber projections 22 would have a low flexibility, and thus, when the pin 1d is brought into contact with the rubber projections 22, the rubber projections 22 may be broken.

Accordingly, the hardness of the rubber projections 22 is set to be 80 to 90 degrees, and thus, the pin 1d may not easily skip the rubber projections 22 and the rubber projections 22 may not be broken.

The static friction coefficient of the rubber projections 22 is 0.4 to 1.4. When the static friction coefficient is less than 0.4, sliding occurs between the pin 1d and the rubber projections 22. On the other side, when the static friction coefficient is more than 1.4, the pin 1d adheres to the rubber projections 22 and the rubber projections 22 may be broken.

Accordingly, the rubber projections 22 is formed so as to have a static friction coefficient of 0.4 to 1.4 so that no sliding occurs between the pin 1d and the rubber projections 22 and the rubber projections 22 may not be easily broken. The more preferable value of the static friction coefficient of the rubber projections 22 is 0.5 to 0.8.

Additionally, the contact pressure applied from the plural pin 1d (the pin 1d engaging the rubber projections 22) to the rubber projections 22 is 0.8 to 3.7MPa. When the contact pressure applied from the plural pin 1d to the rubber projections 22 is less than 0.8MPa, the driving force transmitted from the pin 1d to the rubber projections is weakened. On the other hand, when the contact pressure applied from the plural pin 1d to the rubber projections 22 is more than 3.7MPa, the rubber projections 22 may be broken.

Accordingly, the contact pressure applied from the plural pin 1d to the rubber projections 22 is set to be 0.8 to 3.7MPa, and thus, the breakage of the rubber projections 22 may be prevented and the driving force may be efficiently transmitted from the pin 1d to the rubber projections 22. The more preferable value of the contact pressure applied from the pin 1d to the rubber projections 22 is 1.0 to 3.2MPa.

The contact pressure applied from one pin 1d to the rubber projections 22 is calculated by the equation: (the driving torque/the radius of the pin 1d) / (the contact area of one rubber projections 22 and the pin 1d × the number of the rubber projections 22 engaging the pin 1d).

Thus, by determining the hardness of the rubber projections 22 provided to driving, the ratio (A/B) of the length of the rubber projections 22 in the lateral direction to the length in the direction normal to the length in the lateral direction, the friction coefficient and the contact pressure applied from the sprocket 1 (pin 1d) to the rubber projections 22 into a specific range, falling down (or huge deformation) of the rubber projections 22 is suppressed and the frequency of teeth skipping phenomena is drastically reduced. Nevertheless, when the hardness configuring the rubber projections 22 is low, teeth skipping phenomenon may not be avoided even when the contact pressure applied to the rubber projections 22 is relatively small. For example, when the rubber hardness is about 65 to 75 degrees, teeth skipping phenomenon may not be improved so much.

In the present invention, it is confirmed that the falling down of the rubber projections 22 can be prevented and that the frequency of teeth skipping phenomena may be significantly reduced by determining the shapes and configurations of the rubber projections 22 so as to maintain the strength thereof and by setting the contact pressure applied from the sprocket 1 into a specific numerical value, that is, 0.8 to 3.7MPa.

The hardness and the friction coefficient of the rubber projections 22 may be changed by blending different compounding agent in rubber, e.g., by blending different type of carbon black in a different amount. The friction resistance may be arbitrarily changed by differentiating the amount of fatty acid amide and/or ultrahigh-molecular weight PE powder blended into the rubber.

The rubber material used for the rubber projections 22 of the invention is not limited and is configured by one of natural rubber, synthetic rubber such as isoprene rubber, styrene-butadiene rubber, acrylnitrilebutadiene rubber, ethylene-propylene rubber, butadiene rubber, and butyl rubber, and a blend of two or more of them.

The friction coefficient of the rubber projections 22 may be controlled by blending fatty acid amide and/or ultrahigh-molecular weight polyethylene powder in the rubber composition of the rubber projections 22.

Examples of fatty acid amide include hydroxystearamide, elcylamide, ethylene-bis-stearamide, stearamide, oleylamide, laurylamide, and stearyloleylamide. Higher fatty acid amide is preferable. It is preferable to use 5 to 40 parts by weight of fatty acid amide to 100 parts by weight of raw rubber. When the amount of the fatty acid amide is less than 5 parts by weight, no clear effects are exhibited. On the other hand, an amount of the fatty acid of forty parts by weight or more is not preferable because the rubber material properties are greatly deteriorated.

Ultrahigh-molecular weight polyethylene powder having an average molecular weight of 1,000,000 or more and an average particle diameter of 10 to 50 µm is preferable (e.g., "MIPERON", manufactured by Mitsui Petrochemical Industries, Ltd.). The amount of the ultrahigh-molecular weight polyethylene powder can be 5 to 40 parts by weight and is preferably 5 to 30 parts by weight.

Additives to rubber that have conventionally been used, e.g., carbon black, process oil, an antiaging agent, a vulcanizing agent, a vulcanization accelerator, a processing aid, and various resins (such as phenol resin) may be blended in or added to the rubber composition of the invention, if necessary. Various short fibers may be blended.

### Examples

The rubber track 20 illustrated in Figs. 6 and 7 is manufactured. The height (H) of the rubber projections 22 is set into 60 mm and the pitch C of the rubber projections 22 is set into 110 mm. A real machine test is conducted on the obtained rubber track 20. In the description of each of the examples, the rubber hardness is in conformity with JIS-K6301 and the friction coefficient of the rubber surface/aluminum plate surface at a load of 750 g is measured by the surface properties measuring device, manufactured by SHINTO Scientific Co., ltd. The teeth skipping test is conducted by putting the rubber track in a turning motion on the inclined ground. Examples 1 to 4 and Comparative examples 1 to 4 are shown in Table 1 including the conditions that are not described in the examples.

### (Example 1)

The composition of the rubber forming the rubber projections 22 was, by weight, 70 parts ofNR, 30 parts of SBR, 5 parts of oleyl amide, 60 parts of carbon (HAF), and a typical compounding agent. The rubber hardness was 89 degrees (JIS·A). The static friction coefficient was 0.6. The width was 150 mm. The ratio (A/B) of the length of the rubber projections 22 in the lateral direction to the length in the direction normal to the length in the lateral direction was 1.8. In this example, the contact pressure applied from the pin 1d to the rubber projections 22 was 2.5MPa. The rubber projections 22 were not hugely deformed. Teeth skipping phenomenon hardly occurred.

### (Example 2)

The rubber hardness was 89 degrees. The static friction coefficient was 0.6. The width was 320 mm. The ratio (A/B) of the length of the rubber projections 22 in the lateral direction to the length in the direction normal to the length in the lateral direction was 3.9. In this example, the contact pressure applied from the pin 1d to the rubber projections 22 was 1.2MPa. The rubber projections 22 were not hugely deformed. Teeth skipping phenomenon hardly occurred.

### (Example 3)

The rubber hardness was 89 degrees. The static friction coefficient was 0.6. The width was 105 mm. The ratio (A/B) of the length of the rubber projections 22 in the lateral direction to the length in the direction normal to the length in the lateral direction was 1.3. In this example, the contact pressure applied from the pin 1d to the rubber projections 22 was 1.2MPa. The rubber projections 22 were not hugely deformed. Teeth skipping phenomenon hardly occurred.

### (Example 4)

The rubber hardness was 80 degrees. The static friction coefficient was 1.3. The width was 105 mm. The ratio (A/B) of the length of the rubber projections 22 in the lateral direction to the length in the direction normal to the length in the lateral direction was 1.8. In this example, the contact pressure applied from the pin 1d to the rubber projections 22 was 2.5MPa. The rubber projections 22 were not hugely deformed. Teeth skipping phenomenon hardly occurred.

### (Comparative example 1)

The width of the rubber projections 22 was 350 mm. The ratio (A/B) of the length of the rubber projections 22 in the lateral direction to the length in the direction normal to the length in the lateral direction was 4.3. Other conditions were substantially the same as those of Example 1. In Comparative example 1, the contact pressure applied from the pin 1d to the rubber projections 22 was 1.1MPa. The rubber projections 22 were not hugely deformed. However, teeth skipping phenomenon occurred.

### (Comparative example 2)

The width of the rubber projections 22 was 95 mm. The ratio (A/B) of the length of the rubber projections 22 in the lateral direction to the length in the direction normal to the length in the lateral direction was 1.2. Other conditions were substantially the same as those of Example 1. In Comparative example 2, the contact pressure applied from the pin 1d to the rubber projections 22 was 3.9MPa. Teeth skipping phenomenon did not occur. Nevertheless, the rubber projections 22 were hugely deformed.

### (Comparative example 3)

The hardness of the rubber projections 22 was 73 degrees. Other conditions were substantially the same as those of Example 4. In Comparative example 3, the contact pressure applied from the pin 1d to the rubber projections 22 was 2.5MPa. Teeth skipping phenomenon did not occur. Nevertheless, the rubber projections 22 were hugely deformed.

### (Comparative example 4)

The hardness of the rubber projections 22 was 73 degrees. The static friction coefficient was 1.5. Other conditions were substantially the same as those of Example 4. In Comparative example 4, the contact pressure applied from the pin 1d to the rubber projections 22 is 2.5 MPa. Teeth skipping phenomenon did not occur. Nevertheless, the rubber projections 22 were hugely deformed.

**[Table 1]**

| | Example 1 | Example 2 | Example 3 | Example 4 | Comparative Example 1 | Comparative Example 2 | Comparative Example 3 | Comparative Example 4 |
|---|---|---|---|---|---|---|---|---|
| Rubber hardness | 89 | 89 | 89 | 80 | 89 | 89 | 73 | 86 |
| Static friction coefficient | 0.6 | 0.6 | 0.6 | 1.3 | 0.6 | 0.6 | 1.3 | 1.5 |
| Contact pressure (MPa) | 2.5 | 1.2 | 3.6 | 2.5 | 1.1 | 3.9 | 2.5 | 2.5 |
| A/B | 1.8 | 3.9 | 1.3 | 1.8 | 4.3 | 1.2 | 1.8 | 1.8 |
| Pitch (mm) | 110 | 110 | 110 | 110 | 110 | 110 | 110 | 110 |
| Rubber projections width (mm) | 150 | 320 | 105 | 150 | 350 | 95 | 150 | 150 |
| Teeth skipping test | A | A | A | A | A | C | C | C |
| Wheel coming off | A | A | A | A | C | A | A | A |

In the exemplary embodiment, as illustrated in Fig. 7, the description was made by exemplifying the rubber projections 22 by taking as an example a rubber projections 22 having the inflection point P formed on the side wall. Nevertheless, as illustrated in Fig. 3, in a rubber projections of the type having no inflection point on the side wall, by setting the length of the rubber projections in the lateral direction equal to or larger than the pitch of the rubber projections and equal to or smaller than the length of the pin of the sprocket, contact pressure applied from the sprocket (pin) to the rubber projections is reduced and teeth skipping may be prevented.

In the present invention, teeth skipping phenomenon by using a rubber track having a specific configuration of the rubber projections combined with a plurality of constitutions. Accordingly, the present invention may be applicable to all rubber tracks of the type transmitting the driving force by the engagement of the rubber projections and the sprocket, and thus, has a high technical value.

## Claims

1. A rubber track traveling device, comprising:
a sprocket (1) comprising a pin (1d);
idlers (2, 3); and
a rubber track (20) that is passed over the sprocket (1) provided on a vehicle and the idlers (2, 3),
the rubber track (20) having rubber projections (22) raised on the center of the inner peripheral surface of the track at constant intervals in a travel direction,
wherein the rubber track (20) satisfies the equation of C≤5A, with A being the length of the rubber projections in the lateral direction normal to the travel direction, and C being the pitch in the travel direction of the rubber projections (22),
wherein the rubber projections (22) each have:
side walls each having an upright surface (22A) that is provided substantially
normal but not normal to the inner peripheral surface of the rubber track (20) and an inclined surface (22B) that is inclined from the termination of the upright surface (22A) in the direction approaching each other; and
a top wall (22C) that is formed at the top of the side wall and is parallel with the inner peripheral surface of the rubber track (20),
wherein the height from the inner peripheral surface of the rubber track (20) to the termination of the upright surface (22A) is less than the raduis of the pin (1d) of the sprocket (1), and termination of the upright surface (22A) is less than the radius of the pin (1d) of the sprocket (1), and
such that, on rotation of the rubber track (20) over the sprocket (1), the pin (1d) is brought into contact with the upright surface (22A) of the rubber projections (22).

2. The rubber track of claim 1, wherein the ratio (C/A) of the pitch C of the rubber projections to the length A of the rubber projections in the lateral direction is from 0.3 to 1.0.

3. The rubber track of claim 1 or 2, wherein the contact range of the sprocket and the inner peripheral surface of the rubber track is 170 degrees or less, viewed from the center of the sprocket.

4. The rubber track of any one of claims 1 to 3, wherein the rubber projections are formed of rubber in which at least one of fatty acid amide or low-friction resin powder is blended.

5. The rubber track of claim 4, wherein the rubber projections has a static friction coefficient of 0.4 to 1.4.

6. The rubber track of any one of claims 1 to 5, wherein the contact pressure applied from pin of the sprocket to the rubber projections is 0.8 to 3.7 MPa.

7. The rubber track of any one of claims 1 to 6, wherein the hardness of the rubber projections is 80 to 90 degrees (JIS·A).

8. The rubber track of any one of claims 1 to 7, wherein the ratio (A/B) of the length A of the rubber projections in the lateral direction to the length B in the direction normal to the length A in the lateral direction is from 1.3 to 4.0.

## Patentansprüche

1. Gummiraupen-Bewegungsvorrichtung, die Folgendes umfasst:
ein Kettenrad (1), das einen Zapfen (1d) umfasst,
Spannrollen (2, 3) und
eine Gummiraupe (20), die über das an einem Fahrzeug bereitgestellte Kettenrad (1) und die Spannrollen (2, 3) geführt wird,
wobei die Gummiraupe (20) Gummivorsprünge (22) hat, die auf der Mitte der Innenumfangsfläche der Raupe in gleichbleibenden Abständen in einer Bewegungsrichtung erhöht sind,
wobei die Gummiraupe (20) die Gleichung C ≤ A erfüllt, wobei A die Länge der Gummivorsprünge in der seitlichen Richtung, senkrecht zu der Bewegungsrichtung, ist und C die Teilung der Gummivorsprünge (22) in der Bewegungsrichtung ist,
wobei die Gummivorsprünge (22) jeweils Folgendes aufweisen:
Seitenwände mit je einer aufrechten Fläche (22A), die im Wesentlichen senkrecht, jedoch nicht senkrecht zur Innenumfangsfläche der Gummiraupe (20) bereitgestellt ist, und je einer geneigten Fläche (22B), die vom Ende der aufrechten Fläche (22A) in der sich einander annähernden Richtung geneigt ist, und
eine obere Wand (22C), die am oberen Ende der Seitenwand geformt ist und parallel zur Innenumfangsfläche der Gummiraupe (20) ist,
wobei die Höhe von der Innenumfangsfläche der Gummiraupe (20) zum Ende der aufrechten Fläche (22A) geringer ist als der Radius des Zapfens (1d) des Kettenrads (1), und
derart, dass, bei einer Drehung der Gummiraupe (20) über das Kettenrad (1), der Zapfen (1d) in Kontakt gebracht wird mit der aufrechten Fläche (22A) der Gummivorsprünge (22).

2. Gummiraupe nach Anspruch 1, wobei das Verhältnis (C/A) der Teilung C der Gummivorsprünge zu der Länge A der Gummivorsprünge in der seitlichen Richtung von 0,3 bis 1,0 beträgt.

3. Gummiraupe nach Anspruch 1 oder 2, wobei der Berührungsbereich des Kettenrades und der Innenumfangsfläche der Gummiraupe, gesehen von der Mitte des Kettenrades, 170 Grad oder weniger beträgt.

4. Gummiraupe nach einem der Ansprüche 1 bis 3, wobei die Gummivorsprünge aus einem Gummi geformt sind, in den wenigstens eines von einem Fettsäureamid oder einem reibungsarmen Harzpulver gemischt ist.

5. Gummiraupe nach Anspruch 4, wobei die Gummivorsprünge einen Haftreibungskoeffizienten von 0,4 bis 1,4 haben.

6. Gummiraupe nach einem der Ansprüche 1 bis 5, wobei der von dem Zapfen des Kettenrades auf die Gummivorsprünge ausgeübte Berührungsdruck 0,8 bis 3,7 MPa beträgt.

7. Gummiraupe nach einem der Ansprüche 1 bis 6, wobei die Härte der Gummivorsprünge 80 bis 90 Grad (JIS A) beträgt.

8. Gummiraupe nach einem der Ansprüche 1 bis 7, wobei das Verhältnis (A/B) der Länge A der Gummivorsprünge in der seitlichen Richtung zu der Länge B in der Richtung, senkrecht zu der Länge A in der seitlichen Richtung, von 1,3 bis 4,0 beträgt.

## Revendications

1. Dispositif de déplacement à chenille en caoutchouc, comprenant :
un pignon (1) comportant une broche (1d) ;
des galets tendeurs (2,3) ; et
une chenille en caoutchouc (20), passée au-dessus du pignon (1) agencé sur un véhicule et les galets tendeurs (2, 3) ;
la chenille en caoutchouc (20) comportant des saillies en caoutchouc (22) surélevées sur le centre de la surface périphérique interne de la chenille, à des intervalles constants dans une direction du déplacement ;
dans lequel la chenille en caoutchouc (20) satisfait l'équation C ≤A, A représentant la longueur des saillies en caoutchouc dans la direction latérale perpendiculaire à la direction de déplacement, et C représentant le pas dans la direction de déplacement des saillies en caoutchouc (22) ;
dans lequel les saillies en caoutchouc (22) comportent chacune :
des parois latérales, comportant chacune une surface droite (22A), agencée de manière essentiellement perpendiculaire, mais non pas perpendiculaire à la surface périphérique interne de la chenille en caoutchouc (20), et une surface inclinée (22B), inclinée à partir de la terminaison de la surface droite (22A) dans la direction de leur rapprochement mutuel ; et
une paroi supérieure (22C), formée au niveau de la partie supérieure de la paroi latérale et parallèle à la surface périphérique interne de la chenille en caoutchouc (20) ;
dans lequel la hauteur de la surface périphérique interne, de la chenille en caoutchouc (20) vers la terminaison de la surface verticale (22A), est inférieure au rayon de la broche (1d) du pignon (1) ; et
de sorte que, lors d'une rotation de la chenille en caoutchouc (20) sur le pignon (1), la broche (1d) est mise en contact avec la surface droite (22A) des saillies en caoutchouc (22).

2. Chenille en caoutchouc selon la revendication 1, dans laquelle le rapport (C/A) entre le pas C des saillies en caoutchouc et la longueur A des saillies en caoutchouc, dans la direction latérale, est compris entre 0,3 et 1,0.

3. Chenille en caoutchouc selon les revendications 1 ou 2, dans laquelle l'intervalle de contact du pignon et de la surface périphérique interne de la chenille en caoutchouc correspond à 170 degrés ou moins, vu à partir du centre du pignon.

4. Chenille en caoutchouc selon l'une quelconque des revendications 1 à 3, dans laquelle les saillies en caoutchouc sont formées à partir de caoutchouc dans lequel est mélangé au moins l'un d'un amide d'acide gras ou d'une poudre de résine à coefficient de frottement réduit.

5. Chenille en caoutchouc selon la revendication 4, dans laquelle les saillies en caoutchouc présentent un coefficient de frottement statique compris entre 0,4 et 1,4.

6. Chenille en caoutchouc selon l'une quelconque des revendications 1 à 5, dans laquelle la pression de contact appliquée par la broche du pignon aux saillies en caoutchouc est comprise entre 0,8 et 3,7 MPa.

7. Chenille en caoutchouc selon l'une quelconque des revendications 1 à 6, dans laquelle la dureté des saillies en caoutchouc est comprise entre 80 et 90 degrés (JIS-A).

8. Chenille en caoutchouc selon l'une quelconque des revendications 1 à 7 dans laquelle le rapport (A/B) entre la longueur A des saillies en caoutchouc, dans la direction latérale, et la longueur B, dans la direction perpendiculaire à la longueur A dans la direction latérale, est compris entre 1,3 et 4,0.
